# EUROPÄISCHE PATENTSCHRIFT

(11) **EP 1 096 165 B1**
(45) Veröffentlichungstag und Bekanntmachung des Hinweises auf die Patenterteilung: **29.05.2002**
(21) Anmeldenummer: 99119503.3
(22) Anmeldetag: 01.10.1999
(51) Int. Cl.: F16D 23/06

(54) **Synchronisiereinheit für Wechselgetriebe**
Synchronizer assembly for a gearbox
Assemblage de synchronisation pour une boîte de vitesse

(43) Veröffentlichungstag der Anmeldung: 02.05.2001
(73) Patentinhaber: Ford Global Technologies, Inc., A subsidiary of Ford Motor Company, Dearborn, Michigan 48126 (US)
(72) Erfinder: Bungart, Stephan, 42281 Wuppertal (DE)
(74) Vertreter: Messulam, Alec Moses

(56) Entgegenhaltungen:
- DE-C- 938 106
- US-A- 2 612 787

## Beschreibung

Die Erfindung bezieht sich auf eine Synchronisiereinheit für ein Wechselgetriebe der im Patentanspruch erläuterten Art.

Die Erfindung ist anwendbar für ein 6-Gang-Vorgelege-Wechselgetriebe für Kraftfahrzeuge. Dabei handelt es sich um ein modulares Getriebekonzept, das mit möglichst vielen Gleichteilen die Montage eines manuell geschalteten Getriebes und eines hilfskraftbetätigt geschalteten Getriebes ermöglicht, wobei letzteres ohne Zugkraftunterbrechung schaltbar ist.

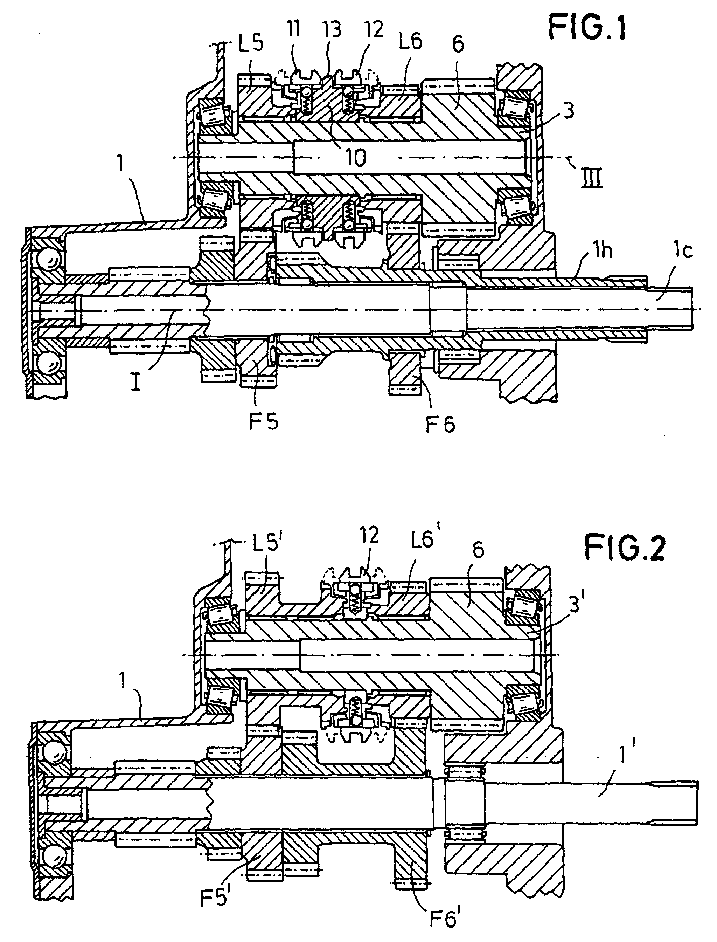

Bei der Ausführung als handschaltbares Getriebe sind, wie üblich, aufeinanderfolgende Gänge benachbart einer Doppel-Synchronisiereinheit angeordnet und werden über eine Schiebemuffe selektiv geschaltet. (Siehe Fig. 2)

Die Aufgabe der Erfindung ist es eine Synchronisiereinheit für ein Wechselgetriebe bereitzustellen, das als ein zugkraftunterbrechungsfrei-hilfskrattbetätigt-schaltbares Wechselgetriebe aufgebaut ist und bei dem normalerweise die Gänge so angeordnet sein müssen, daß aufeinanderfolgende Gänge auf unterschiedlichen Getriebewellen angeordnet bzw. unterschiedlichen Synchronisiereinheiten zugeordnet sind.

Um die Modularität des Getriebekonzeptes für ein 6-Gang-Vorgelege-Wechselgetriebe für Kraftfahrzeuge möglichst weitgehend beizubehalten, ist der 5. und der 6. Gang auf einer dritten Getriebewelle angeordnet und müssen, um die zugkraftunterbrechungsfreie Schaltung zu ermöglichen, über getrennte Synchronisiereinheiten geschaltet werden.

Aus der US 4 360 094 A1 ist an sich eine Synchronisiereinheit für ein Wechselgetriebe bekannt, die nur zum Schalten eines benachbarten Ganges ausgebildet ist.

Dabei handelt es sich jedoch um eine Synchronisiereinheit, deren Schiebemuffe offensichtlich nach wie vor in zwei entgegengesetzte Richtungen bewegbar ist und bei der ein Herausfallen des Synchronriegels durch eine entsprechend ausgebildete Anschlagscheibe verhindert wird.

In der US-A-2 612 787 ist in ein Wechselgetriebe mit einer Synchronisiereinheit offenbart, in der zwei einzeln schaltbare Schaltmuffen zwischen zwei benachbarten, lose laufende Zahnräder angeordnet sind. Die Schaltmuffen sind direkt nebeneinander auf zwei getrennten Synchronnaben angeordnet und können somit entweder einzeln oder aber auch gleichzeitig die beiden benachbarten Zahnräder schalten.

Sind bei dieser Anordnung die Nuten der Schaltverzahnung zwischen Schaltmuffen und Synchronnaben fluchtend angeordnet, kann es zu einer unbeabsichtigten Verschiebung der Schaltmuffen auf den Synchronnaben kommen, wenn eine Schaltmuffe gegen die andere stößt, was wiederum zu einer nicht erwünschten Ansynchronisierung führt. Ausgelöst wird dies u. A. durch Getriebeschwingungen, durch Spiel im Schaltgestänge und/oder durch Ausrücken einer Schaltmuffe. Von daher ist die Anordnung der Schaltmuffen auf zwei getrennten Synchronnaben erforderlich, damit beide Schaltmuffen in Richtung der anderen Schaltmuffe einen Anschlag aufweisen. Dies wird erreicht, indem die Nuten der beiden Synchronnaben nicht fluchten. Nachteilig ist hier jedoch der höhere Bauaufwand mit zwei Synchronnaben.

Die Aufgabe der Erfindung ist es, eine Synchronisiereinheit für ein Wechselgetriebe derart auszubilden, daß zwei benachbarte, auf einer Getriebewelle angeordnete Losräder einer Gangstufe einzeln und unabhängig voneinander eingerückt werden können.

Gemäß der Erfindung wird diese Aufgabe durch eine Synchronisiereinheit für ein Wechselgetriebe mit den im einzigen Patentanspruch aufgezeigten Merkmalen gelöst.

Dadurch, daß auf der, auf der Getriebewelle festen Synchronnabe mit den auf der Getriebewelle benachbart, lose laufend angeordneten Zahnrädern, zwei getrennte Schiebemuffen mit entsprechenden Synchronriegeln und Federrasten angeordnet sind und unabhängig voneinander jeweils nur in eine Richtung verschiebbar angeordnet sind und in der anderen Richtung durch einen Anschlag begrenzt sind, wird ein unabhängiges selektives Schalten der beiden benachbarten Zahnräder in der Weise ermöglicht, daß eine zugkraftunterbrechungsfreie Schaltung realisiert werden kann.

Die Erfindung wird anhand eines in der beiliegenden Zeichnung gezeigten Ausführungsbeispieles näher erläutert. Es zeigt:
- Fig. 1: einen Schnitt durch ein Wechselgetriebe im Bereich einer Eingangsgetriebewelle und einer dritten Getriebewelle mit den Zahnradanordnungen für den 5. und 6. Gang mit einer Synchronisiereinheit gemäß der Erfindung und
- Fig. 2: eine ähnliche Ansicht wie Fig. 1, jedoch mit der herkömmlichen Doppel-Synchronisiereinheit zwischen den losen Zahnrädern für den 5. und 6. Gang, wie sie für eine handschaltbare Ausführung des Getriebes erforderlich ist.

In den Figuren ist ein Teilschnitt durch ein Wechselgetriebe gezeigt, in dem in einem Getriebegehäuse 1 konzentrisch zu einer ersten Getriebewellenachse I eine zentrale Eingangswelle 1c und eine hohle Eingangswelle 1h angeordnet sind, wobei auf der zentralen Eingangswelle 1c das Festrad F5 für den 5. Gang und auf der hohlen Eingangswelle 1h das Festrad F6 für den 6. Gang angeordnet sind.

Auf einer konzentrisch zu einer dritten Getriebewellenachse III angeordneten dritten Getriebewelle 3 ist ein Abtriebsritzel 6 ausgebildet und auf der Getriebewelle 3 sind die losen Zahnräder L5 für den 5. Gang und L6 für den 6. Gang angeordnet.

Auf der Getriebewelle III ist eine Synchronnabe 10 festgelegt, auf der zwei einzelne Schiebemuffen 11 und 12 getrennt durch einen Anschlag 13 derart angeordnet sind, daß sie jeweils nur in eine Richtung in Eingriff mit ihrem benachbarten Losrad ein- und ausrückbar sind.

Die an einer Synchronisiereinheit erforderlichen Einzelteile, wie Synchronriegel, Federraste, Synchronring sowie Kupplungsring an den losen Zahnrädern werden hier im einzelnen nicht beschrieben, da sie dem Fachmann hinreichend geläufig sind.

Es wird lediglich darauf hingewiesen, daß Fig. 1 die erfindungsgemäße Synchronisiereinheit zeigt, wohingegen die Fig. 2 eine herkömmliche Anordnung einer Doppel-Synchronisiereinheit aufzeigt, wie sie an sich dem Fachmann geläufig ist.

Im Zusammenhang mit der früheren Anmeldung wird lediglich darauf hingewiesen, daß Fig. 2 die Ausführung des Wechselgetriebes in Handschaltversion zeigt, wodurch nur eine Eingangsgetriebewelle 1' vorhanden ist, auf der entsprechende Festräder F5' und F6' für den 5. und 6. Gang angeordnet sind und auf der dritten Getriebewelle 3' mit einem identischen Abtriebsritzel 6 sind entsprechende Losräder L5' und L6' angeordnet. Die entsprechende Doppel-Synchronisiereinheit ist von völlig herkömmlicher Bauart und wird dementsprechend im einzelnen nicht erläutert.

## Patentansprüche

1. Synchronisiereinheit für ein Wechselgetriebe, mit einer auf einer Getriebewelle (3) festen Synchronnabe (10) zwischen zwei benachbart auf der Getriebewelle (3) lose laufenden Zahnrädern (L5, L6) und zumindest einer darauf axial verschiebbaren Schiebemuffe, über die sie unter Mitwirkung von Synchronriegeln, Synchronringen über Kupplungsringe treibend mit der Getriebewelle verbindbar sind, wobei
auf der Synchronnabe (10) zwei einzeln schaltbare Schaltmuffen (11, 12) getrennt durch einen Bund (13) für die beiden benachbarten, lose laufenden Zahnrädern (L5, L6) angeordnet sind.

## Claims

1. Synchroniser assembly for a gearbox, with a synchronous hub (10) fixed on a gear shaft (3) between two adjoining loose running toothed wheels (L5, L6) on the gear shaft (3) and at least one sliding sleeve which is axially displaceable thereupon, via which with the interaction of synchronous bolts, synchronous rings can be connected in a driving way with the gear shaft via coupling rings, wherein
on the synchronous hub (10) two selector sleeves (11, 12) which can be shifted individually and are separated by a collar (13) are arranged for the two adjoining loose running toothed wheels (L5, L6).

## Revendications

1. Assemblage de synchronisation pour une boîte de vitesses, comprenant un moyeu synchrone (10) fixe sur un arbre de transmission (3), entre deux pignons (L5, L6) à rotation folle dans des positions voisines sur ledit arbre de transmission (3), et au moins un manchon coulissant pouvant coulisser axialement sur ledit moyeu et pouvant établir une liaison avec l'arbre de transmission en coopérant avec des verrous synchrones et des bagues synchrones, avec effet d'entraînement par l'intermédiaire de bagues d'accouplement, dans lequel
deux manchons sélecteurs (11, 12), enclenchables individuellement et séparés par un collet (13), sont disposés sur ledit moyeu synchrone (10) et sont affectés aux deux pignons voisins (L5, L6) à rotation folle.
